# EUROPÄISCHE PATENTANMELDUNG

(11) **EP 1 312 499 A2**
(43) Veröffentlichungstag der Anmeldung: **21.05.2003**
(21) Anmeldenummer: 02025324.1
(22) Anmeldetag: 13.11.2002
(51) Int. Cl.: B60K 28/02

(54) **Fahrerassistenzsystem**

(30) Priorität: 16.11.2001 DE 10156509
(71) Anmelder: AUDI AG, 85045 Ingolstadt (DE)
(72) Erfinder: Rosenow, Andrey, 85080 Gaimersheim (DE); Nuber, Heike, 91171 Greding (DE)
(74) Vertreter: Thielmann, Frank

(57) **Zusammenfassung**

Die Erfindung betrifft ein Fahrerassistenzsystem (10). Um ein verbessertes Fahrerassistenzsystem zur Verfügung zu stellen, ist gemäß der Erfindung vorgesehen, dass bei einem Fahrerassistenzsystem (10) mit einer Vorrichtung zur Müdigkeitserkennung (16), einer Vorrichtung zur Spurverlassenserkennung (20), einer Steuerung (12) und mindestens einem, ein erstes Warnsignal aussendenden ersten Signalgeber (32) die Intensität des ersten Warnsignals in Abhängigkeit von den Ausgangswerten der Vorrichtung zur Müdigkeitserkennung (16) variiert wird. Durch die Änderung der Intensität des ersten Warnsignals wird erreicht, dass der das Fahrerassistenzsystem (10) nutzende Fahrer die jeweiligen Warnsignale in jedem Zustand optimal wahrnimmt, aber dennoch nicht belastet wird.

## Beschreibung

Die Erfindung betrifft ein Fahrerassistenzsystem.

Aus DE 196 02 766 C2 ist ein Fahrerassistenzsystem bekannt, welches eine Wachsamkeits-Beurteilungsvorrichtung, eine Kollisions-Wahrscheinlichkeits-Abschätzvorrichtung, eine Außerspurfahrt-Abschätzvorrichtung, eine Steuerung und einen Signalgeber umfasst, welcher auf ein Wachsamkeitssignal, ein Kollisions-Wahrscheinlichkeitssignal und ein Außerspurfahrt-Wahrscheinlichkeitssignal hin dem Fahrer ein Warnsignal vermittelt. Die Wachsamkeits-Beurteilungsvorrichtung arbeitet gemäß dieser Schrift entweder auf der Basis von Aktionen des Fahrers, auf der Basis von Reaktionen des Fahrers auf ermittelte Hindernisse oder auf Basis des Reaktionsverhaltens.

Aus DE 43 38 244 A1, von der der Oberbegriff des Anspruchs 1 ausgeht, ist ferner ein Fahrerassistenzsystem bekannt, welches über einen ersten akustischen Signalgeber verschiedene Hörwarnungen in Form von Nachrichten und über einen zweiten optischen Signalgeber optische Signale in Form von Warnanzeigen ausgibt. Bei diesem Fahrerassistenzsystem erfolgt die Ausgabe von Warnungen in Abhängigkeit von dem Zustand des Fahrers, wobei zur Überwachung des Zustandes des Fahrers diverse Sensoren vorgesehen sind, unter anderem ein Blinzeldetektor und ein Blutdrucksensor. Aufgrund von Sensordaten dieser Sensoren wird ein Warnhinweis nur dann ausgegeben, wenn das System am Zustand des Fahrers erkennt, dass dieser unaufmerksam ist.

Es hat sich jedoch gezeigt, dass die von den bekannten Vorrichtungen ausgegebenen Warnsignale in vielen Situationen nicht den gewünschten Effekt einer erhöhten Fahrsicherheit erzielen.

Der Erfindung liegt daher die Aufgabe zu Grunde, ein verbessertes Fahrerassistenzsystem zur Verfügung zu stellen.

Die Lösung dieser Aufgabe erfolgt erfindungsgemäß mit den Merkmalen des Anspruchs 1.

Gemäß der Erfindung wird ein Fahrerassistenzsystem mit einer Vorrichtung zur Müdigkeitserkennung, einer Vorrichtung zur Spurverlassenserkennung, einer Steuerung und mindestens einem, ein erstes Warnsignal aussendenden ersten Signalgeber zur Verfügung gestellt, die dadurch gekennzeichnet sind, dass die Intensität des ersten Warnsignals in Abhängigkeit von den Ausgangswerten der Vorrichtung zur Müdigkeitserkennung variiert wird. Durch die Änderung der Intensität des ersten Warnsignals wird erreicht, dass der das Fahrerassistenzsystem nutzende Fahrer das Warnsignal in jedem Zustand optimal wahrnimmt, aber dennoch nicht belastet wird.

Gemäß einer bevorzugten Ausführungsform weist das Fahrerassistenzsystem neben dem ersten Signalgeber einen von dem ersten Signalgeber verschiedenen, ein zweites Warnsignal aussendenden zweiten Signalgeber auf, wobei die Art und / oder die Intensität des Warnsignals in Abhängigkeit von den Ausgangswerten der Vorrichtung zur Müdigkeitserkennung variiert wird. Die Variation der Art des Warnsignals besteht dabei vorzugsweise in einem Wechsel von Warnsignalen des ersten Signalgebers und des zweiten Signalgebers.

Eine weitere Verbesserung der Wirksamkeit der Warnsignale erfolgt, wenn neben dem ersten bzw. zweiten Signalgeber ein weiterer Warnsignal aussendender weiterer Signalgeber vorgesehen ist, wobei die Art und / oder die Intensität des Warnsignals in Abhängigkeit von den Ausgangswerten der Vorrichtung zur Müdigkeitserkennung variiert wird.

Vorzugsweise ist der erste Signalgeber ein optischer Signalgeber zur Ausgabe optischer erster Warnsignale, insbesondere eines Blink- und / oder Blitzlichtes. Ohne Blendung des Fahrers ist es möglich, solche optischen Warnsignale in ihrer Intensität durch Variation der Wiederkehr zu variieren.

Ferner ist der zweite Signalgeber vorzugsweise ein akustischer Signalgeber zur Ausgabe akustischer zweiter Warnsignale. Solche akustischen Warnsignale lassen sich in besonders einfacher Weise durch Variationen ihrer Lautstärke und/oder ihrer Frequenz und/oder Tonart in ihrer Intensität variieren.

Als weiterer Signalgeber ist vorzugsweise ein taktiler Signalgeber zur Ausgabe weiterer, taktiler Warnsignale, insbesondere von Sitz- und / oder Lenkradvibrationen vorgesehen. Da Vibrationen von dem menschlichen Körper auch dann noch gut wahrgenommen werden, wenn Müdigkeit das Seh- und / oder Hörvermögen bereits beeinträchtigt, wird durch einen solchen Signalgeber die Fahrsicherheit erheblich erhöht.

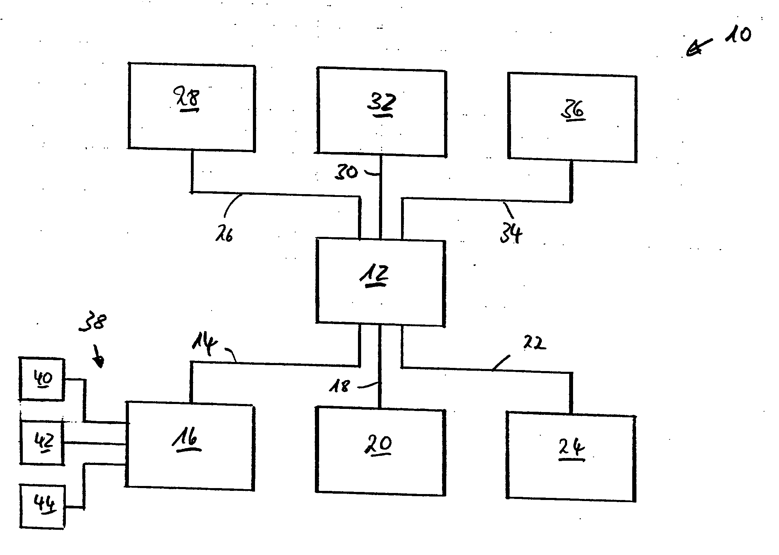

Weitere vorteilhafte Ausgestaltungen und Weiterbildungen der Erfindung ergeben sich aus den Unteransprüchen sowie aus der Beschreibung im Zusammenhang mit der Zeichnung, in der ein erfindungsgemäßes Fahrerassistenzsystem schematisch dargestellt ist.

Das gezeigte Fahrerassistenzsystem 10 weist eine zentrale Steuerung 12 auf, welche über eine erste Datenleitung 14 eingangsseitig mit einer Vorrichtung zur Müdigkeitserkennung 16 verbunden ist. Ferner ist die Steuerung 12 eingangsseitig über eine zweite Datenleitung 18 mit einer Vorrichtung zur Spurverlassenserkennung 20 und über eine dritte Datenleitung 22 mit einer Vorrichtung zur Abschätzung einer Kollisionswahrscheinlichkeit 24 verbunden.

Ausgangsseitig steuert die Steuerung 12 über eine erste Signalleitung 26 einen als optischen Signalgeber ausgebildeten ersten Signalgeber 28, über eine zweite Signalleitung 30 einen als akustischen Signalgeber ausgebildeten zweiten Signalgeber 32 und über eine dritte Signalleitung 34 einen weiteren Signalgeber 36 an, welcher nach Art eines Vibrationsalarmes eine Lenkrad- und / oder Sitzvibration vermittelt.

Die Vorrichtung zur Müdigkeitserkennung 16 ist über drei Sensorleitungen 38 mit einem ersten, zweiten und dritten Sensor 40, 42, 44 verbunden, welche aufgrund von physiologischen Daten des Fahrers oder Verhaltensdaten dessen Grad der Wachsamkeit (wach, vermindert aufmerksam, hochgradig einschlafgefährdet) ermitteln. Dabei ist der erste Sensor 40 ein Lenkwinkelsensor zur Ermittlung des Lenkverhaltens, der zweite Sensor 42 eine Kamera zur Ermittlung des Verhaltens des Fahrzeugs in der Fahrspur und der dritte Sensor 44 ein Detektor zur Ermittlung des Lidschlussverhaltens.

Die Funktion des Fahrerassistenzsystems wird anhand folgender Beispiele erläutert:

Verlässt ein das Fahrerassistenzsystem nutzender Fahrer seine Fahrspur und wird dies von der Vorrichtung zur Spurverlassenserkennung 20 nachgewiesen, überprüft die Steuerung 12 anhand der Daten der Vorrichtung zur Müdigkeitserkennung 16, in welchem Zustand sich der Fahrer befindet. Ist dieser wach, erfolgt nur eine optische und / oder leise akustische Warnung.

Verlässt der Fahrer dagegen seine Fahrspur in einem Zustand verminderter Aufmerksamkeit, welcher von der Vorrichtung zur Müdigkeitserkennung 16 nachgewiesen wird, erfolgt über die Steuerung 12 und den ersten Signalgeber 28 eine optische Anzeige und zusätzlich über den zweiten Signalgeber 32 eine gut vernehmliche akustische Warnung in einer angenehmen Tonart.

Ist der Fahrer nicht nur vermindert aufmerksam, sondern schläfrig und verlässt er in diesem Zustand seine Fahrspur, erfolgt über den akustischen Signalgeber 32 eine akustische Warnung mit leicht erhöhter Lautstärke.

Ist der Fahrer aufgrund von Signalen der Vorrichtung zur Müdigkeitserkennung 16 als hochgradig einschlafgefährdet einzustufen und verlässt er in diesem Zustand seine Fahrspur, erfolgt eine laute akustische Warnung, vorzugsweise mit einem unangenehmen Warnton und zusätzlich eine taktile Warnung über den weiteren Signalgeber 36 in Form einer Sitz- und / oder Lenkradvibration.

Es ist ersichtlich, dass durch die Variation der Art und der Intensität des Warnsignals verhindert wird, dass sich der Fahrer an die Warnsignale des Fahrerassistenzsystems 10 gewöhnt und diesem seine Aufmerksamkeit verweigert. Gleichzeitig wird durch die Variation erreicht, dass Warnsignale einen wachen / fitten Fahrer nicht stören, da deren Intensität seinem Zustande angepasst ist. Durch die Erfindung wird die Wahrnehmung der Warnsignale bei geringer Aufnahmefähigkeit des Fahrers verbessert. Bei hoher Aufnahmefähigkeit wird der Fahrer durch die Warnsignale wenig belastet, wodurch insgesamt die Akzeptanz des Fahrerassistenzsystems 10 bei dem Fahrer gesteigert und somit die Verkehrssicherheit erhöht wird.

Weitere, die Funktionalität des Fahrerassistenzsystems 10 steigernde Signalarten, Intensitäten und Kombinationen sind in Abhängigkeit vom Fahrerzustand und der Fahrsituation in der nachfolgenden Tabelle dargestellt, die bevorzugte Beispiele zur Auslegung einer fahrerzustandsangepassten Wamfunktion zeigt .

| **1. Signalgeber** **optisch** | | | **2. Signalgeber** **akustisch** | | | **3. Signalgeber** **taktil** | |
|---|---|---|---|---|---|---|---|
| | Permanent Niedrige Intensität | Blinkend Hohe Intensität | Leise, Warnton angenehm | Mittel Warnton angenehm | Laut, Warnton unangenehm | Vibration Schwach angenehm | Vibration Stark angenehm |
| **Verlassen der** **Spur** | | | | | | | |
| Fahrer wach | X | | x | | | | |
| Fahrer vermindert aufmerksam | | X | | x | | | |
| Fahrer schläfrig | | | | X | | x | |
| Fahrer hochgradig einschlafgefährdet | | | | | X | | X |

| **Kollision** **möglich** | | | | | | | |
|---|---|---|---|---|---|---|---|
| Fahrer wach | | x | x | | | | |
| Fahrer vermindert aufmerksam | | | | x | | x | |
| Fahrer schläfrig | | | | | x | x | |
| Fahrer hoch gradig einschlafgefährdet | | | | | X | | X |

## Patentansprüche

1. Fahrerassistenzsystem mit einer Vorrichtung zur Müdigkeitserkennung (16), einer Vorrichtung zur Spurverlassenserkennung (20), einer Steuerung (12) und mindestens einem ein erstes Warnsignal aussendenden ersten Signalgeber (28), **dadurch gekennzeichnet, dass** die Intensität des ersten Warnsignals in Abhängigkeit von Ausgangswerten der Vorrichtung zur Müdigkeitserkennung (16) variiert wird.

2. Fahrerassistenzsystem nach Anspruch 1, **gekennzeichnet durch** einen von dem ersten Signalgeber (28) verschiedenen, ein zweites Warnsignal aussendenden zweiten Signalgeber (32), wobei die Art und / oder die Intensität des Warnsignals in Abhängigkeit von den Ausgangswerten der Vorrichtung zur Müdigkeitserfassung (16) variiert wird.

3. Fahrerassistenzsystem nach Anspruch 1 oder 2, **gekennzeichnet durch** einen von dem ersten bzw. Signalgeber (28, 32) verschiedenen, ein weiteres Warnsignal aussendenden weiteren Signalgeber (36), wobei die Art und / oder die Intensität des Warnsignals in Abhängigkeit von den Ausgangswerten der Vorrichtung zur Müdigkeitserkennung (16) variiert wird.

4. Fahrerassistenzsystem nach einem der Ansprüche 1 bis 3, **dadurch gekennzeichnet, dass** der erste Signalgeber (28) ein optischer Signalgeber zur Ausgabe optischer erster Warnsignale, insbesondere eines Blink- und / oder Blitzlichtes ist.

5. Fahrerassistenzsystem nach einem der Ansprüche 2 bis 4, **dadurch gekennzeichnet, dass** der zweite Signalgeber 32 ein akustischer Signalgeber zur Ausgabe akustischer zweiter Warnsignale ist.

6. Fahrerassistenzsystem nach einem der Ansprüche 3 bis 6, **dadurch gekennzeichnet, dass** der weitere Signalgeber (36) ein taktiler Signalgeber zur Ausgabe weiterer, taktiler Warnsignale, insbesondere von Sitz- und / oder Lenkradvibrationen ist.
